(19) Europäisches Patentamt

European Patent Office

Office européen des brevets

(11) EP 0 797 339 B1

(12) EUROPÄISCHE PATENTSCHRIFT

(45) Veröffentlichungstag und Bekanntmachung des Hinweises auf die Patenterteilung:
**29.12.2004 Patentblatt 2004/53**

(51) Int Cl.⁷: **H04M 9/08**, H04B 3/20, H03G 3/32, H03G 7/00, H04R 3/02

(21) Anmeldenummer: **97400564.7**

(22) Anmeldetag: **14.03.1997**

(54) **Verfahren und Schaltungsanordnung zur Verbesserung der Übertragungseigenschaften einer echobehafteten Übertragungsstrecke in einem Telekommunikationsnetz**

Method and circuit for improving the transmission properties of a transmission link subjected to echo in a telecommunication network

Procédé et circuit pour améliorer la caractéristique de transmission d'une liaison de télécommunications perturbée par un écho

(84) Benannte Vertragsstaaten:
**AT BE CH DE ES FR GB IT LI NL SE**

(30) Priorität: **23.03.1996 DE 19611548**

(43) Veröffentlichungstag der Anmeldung:
**24.09.1997 Patentblatt 1997/39**

(73) Patentinhaber: **ALCATEL**
**75008 Paris (FR)**

(72) Erfinder:
• **Matt, Hans Jürgen, Dr.**
**71686 Remseck (DE)**

• **Walker, Michael**
**7366 Baltmannsweiler 2 (DE)**

(74) Vertreter: **Rausch, Gabriele, Dr. et al**
**Alcatel**
**Intellectual Property Department Stuttgart**
**70430 Stuttgart (DE)**

(56) Entgegenhaltungen:
**EP-A- 0 600 164       US-A- 4 891 837**
**US-A- 4 979 163       US-A- 5 359 653**
**US-A- 5 467 394**

**Beschreibung**

Die Erfindung betrifft ein Verfahren und eine Schaltungsanordnung zur Verbesserung der Übertragungseigenschaften einer echobehafteten Übertragungsstrecke in einem Telekommunikationsnetz, das beispielsweise aus der Zusammenschaltung von Telekommunikationssystemen in analoger und digitaler Schaltungstechnik besteht. Probleme bereiten bei dieser Zusammenschaltung die Übergänge von zweidrähtigen Übertragungsleitungen, wie sie typisch für die Teilnehmeranschlußleitungen bei analogen Telekommunikationsnetzen sind, zu vierdrähtigen Übertragungsleitungen in digitalen Telekommunikationsnetzen. Diese 2Draht/4Draht-Übergänge werden mit Gabelschaltungen realisiert, bei denen Fehlanpassungen der Leitungsnachbildung an die tatsächlichen Eigenschaften der Leitungen technisch nie vollständig vermieden werden können, so daß dadurch Signalreflexionen auftreten, die als störende Echos die Sprachverständlichkeit zwischen den Teilnehmern erheblich herabsetzen können oder die bei einer Datenübertragung die Fehlerrate wesentlich erhöhen können.

Es ist grundsätzlich bekannt, die Wirkung der Echos durch Echokompensatoren zu beseitigen, vgl. R. Wehrmann u.a.: Signalverarbeitungsverfahren zur Verbesserung der Sprachkommunikation über Freisprecheinrichtungen. Der Fernmelde-Ingenieur, 48. Jahrgang, Oktober 1994, Seite 27-28. In diesem Aufsatz wird beschrieben, wie mit einem Echokompensator die Übertragungsfunktion des realen Systems möglichst genau nachgebildet werden kann. Das beim Teilnehmer eintreffende Signal durchläuft dann sowohl das reale als auch das durch den Echokompensator nachgebildete System und anschließend wird das Ausgangssignal des Echokompensators vom echobehafteten Signal des realen Systems subtrahiert, so daß somit das Echo weitgehend kompensiert wird. Bei einem realen System, zum Beispiel Lautsprecher-Raum-Mikrofon, kann mit einem solchen Echokompensator das sog. lokale Echo, das durch die akustische Kopplung zwischen Lautsprecher und Mikrofon bei Freisprecheinrichtungen entsteht, erheblich reduziert werden.

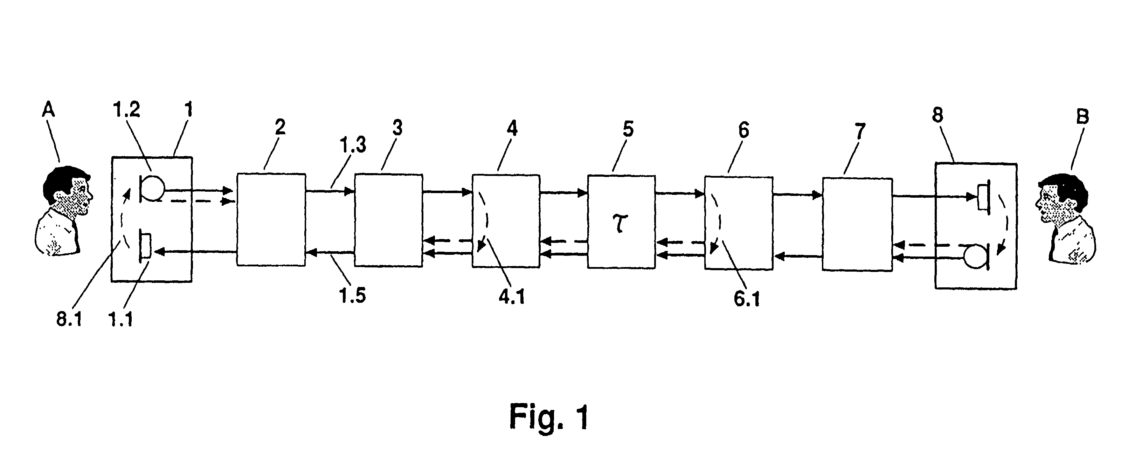

Durch fehlangepaßte Gabelschaltungen in Telekommunikationsnetzen bei 2Draht/4Draht-Übergängen entsteht eine elektrische Kopplung zwischen dem Sendepfad 1.3 und dem Empfangspfad 1.5 und ein Teil des gesendeten Signals wird wie in Fig. 1 gezeigt als sog. Leitungsecho über den Empfangspfad zum Teilnehmer zurückgesendet. In Abhängigkeit von der Entfernung zwischen Teilnehmer und Gabelschaltung längs der Übertragungsstrecke und unterschiedlicher Übertragungsmedien und Übertragungseinrichtungen, wie zum Beispiel Satellitenstrecken, Unterseekabelstrecken, Verschlüsselungsgeräte oder hochkomprimierende Audio/Video-Codecs ergeben sich Echos mit unterschiedlicher Intensität und Laufzeit, die grob in nahe Echos und ferne Echos unterteilt werden. Ein Leitungsübertragungssystem mit Sendepfad und Empfangspfad unterscheidet sich somit insbesondere hinsichtlich der unterschiedlichen Echolaufzeiten und der unterschiedlichen Leitungsdämpfungen wesentlich von einem System Lautsprecher-Raum-Mikrofon.

Zur Realisierung von Echokompensatoren werden vorzugsweise adaptive digitale Filter eingesetzt, deren Filterkoeffizienten beispielsweise nach dem Normalized Least Mean Square Algorithmus, kurz NLMS-Algorithmus, bestimmt und eingestellt werden können, vgl. T. Hahn, H.-J. Jentschel: Kombination von Geräuschreduktion und Echokompensation beim Freisprechen. Nachrichtentechnik Elektronik, Berlin 43 (1993), Seite 274-280. Die Filterkoeffizienten müssen entsprechend dem sich ändernden Echosignal ständig aktualisiert werden. Die notwendige Filterlänge wird durch die Abtastfrequenz und durch die längste Echolaufzeit bestimmt. Bei fernen Echos ist die Echolaufzeit sehr unterschiedlich und kann mehr als 250ms betragen, so daß entweder die Anzahl der zu berechnenden Filterkoeffizienten sehr groß werden muß oder ein Verfahren zur Bestimmung der einzelnen Echolaufzeiten eingesetzt werden muß, beispielsweise eine Korrelationsanalyse, die einen hohen Rechenaufwand erfordert, vgl. DE 43 05 256 A1. Aus dieser Veröffentlichung ist bekannt, eine Korrelationsmessung zwischen empfangenem Echosignal und gesendetem Signal vorzunehmen, um den genauen Zeitpunkt für die Bestimmung der Echolaufzeiten und der Filterkoeffizienten zu ermitteln. Die praktische Anwendung dieser Lösung scheitert jedoch daran, daß der Aufwand zu groß wird.

Zur Reduzierung von Wirkungen lokaler Echos beim Freisprechen ist es bekannt, Kompander einzusetzen, mit denen Sendesignale oberhalb eines Sollwertes auf einen einheitlichen Signalpegel komprimiert, soweit sie den Sollwert aufweisen, verstärkt und soweit sie unterhalb des Sollwertes liegen, bedämpft werden. So ist beispielsweise eine in der Patentschrift DE 37 24 346 A1 beschriebene Schaltungsanordnung zur Dynamiksteuerung eines Endgerätes bekannt, bei der zum Zwecke des Freisprechens mit einem steuerbaren Kompander der Verstärkungsgrad für die von einem Mikrofon gelieferten Signalspannungen an den Sollwert angepaßt wird. Damit wird erreicht, daß Schwankungen des Mikrofonsignals, die durch mäßige Veränderungen im Besprechungsabstand und individueller Sprachlautstärke entstehen, auf einen gleichmäßigeren Lautstärkepegel auf der Wiedergabeseite komprimiert werden.

Weiterhin ist ein Verfahren zum Verbessern der Übertragungseigenschaften einer elektroakustischen Anlage bekannt, mit dem die Lage der Kompanderkennlinie automatisch gesteuert wird, vgl. DE 42 29 912 A1. Mit dem Verfahren wird erkannt, ob das Sendesignal von der Sprache oder von einem Geräusch herrührt. Mittels der aus der Sprach- und Geräuscherkennung erzeugten Steuergröße für die Kompanderkennlinie wird erreicht, daß die zu übertragende Sprache mit konstantem Pegel gesendet wird, daß der Hintergrundgeräuschpegel für die Übertragung abgesenkt wird und daß mit zunehmendem Umgebungsgeräusch die Wiedergabeempfangslautstärke angehoben wird.

Der Einsatz der zuvor beschriebenen Kompanderanordnung ist zwar in Freisprecheinrichtungen zur Unterdrückung lokaler Echos bekannt. Diese Kompanderanordnung ist jedoch für die Unterdrückung von Leitungsechos nicht geeignet, weil bei Leitungen berücksichtigt werden muß, daß die Signalpegel auf den Leitungen der Telekommunikationsnetze, speziell bei Wählleitungen zeitlich von einer Verbindung zu einer anderen Verbindung, im Bereich von größer 20dB schwanken können und daß die Signallaufzeiten abhängig zum Beispiel von der Anzahl der zwischen den Verbindungspunkten liegenden Satellitenstrecken oder von der Art der Signalverarbeitungssysteme, beispielsweise Kompression, im Bereich von 10ms bis 10s schwanken können.

Daraus resultiert die Aufgabe, ein Verfahren und eine Schaltungsanordnung anzugeben, mit denen die Wirkung von Leitungsechos in Telekommunikationsnetzen bei unterschiedlichen Leitungsdämpfungen und unterschiedlichen Echolaufzeiten beseitigt werden können und mit denen die Natürlichkeit der Sprachübertragung in Senderichtung und in Empfangsrichtung verbessert werden kann.

Diese Aufgabe wird erfindungsgemäß durch das im ersten Patentanspruch beschriebene Verfahren und durch die im fünften Patentanspruch beschriebene Schaltungsanordnung gelöst.

Das Wesen der Erfindung besteht darin, daß mit Hilfe eines Kompanders mit einer völlig neuen Steuerung die Wirkung von Leitungsechos unabhängig von der Größe der Verzögerungszeit und den Pegelverhältnissen gegenüber dem gesendeten Sprachsignal auch unter ungünstigsten Übertragungsbedingungen beseitigt wird, indem

a) der Sollwert der Kompanderkennlinie anders als bei den bereits bekannten Steuerungen beim Freisprechen in Abhängigkeit vom geschätzten Leitungspegel des fernen Sprechers gesteuert wird

b) zwischen dem Pegel der empfangenen Echos und dem Empfangspegel des fernen Sprechers und seinem Hintergrundgeräusch unterschieden wird und

c) zur Verbesserung der Natürlichkeit der Sprachübertragung verschiedene Kompanderkennlinientypen mit unterschiedlichem Hub eingesetzt werden.

Das Verfahren ist kostengünstig realisierbar, da weder digitale Filter mit großer Filterkoeffizientenanzahl noch aufwendige Korrelationsmessungen erforderlich sind.

Die Erfindung wird nachstehend an einem Ausführungsbeispiel erläutert. In der dazugehörigen Zeichnung zeigen

Fig. 1             ein Blockschaltbild einer Übertragungsstrecke zwischen einem lokalen Teilnehmer und einem fernen Teilnehmer,

Fig. 2a           ein Schaltbild einer erfindungsgemäßen Schaltungsanordnung für einen Leitungsecho-Unterdrücker,

Fig. 2b           ein Schaltbild gemäß Fig. 2a mit einer detaillierten Schaltungsanordnung für einen Kompander,

Fig. 3a, 3b, 3c    verschiedene erfindungsgemäße charakteristische Übertragungskennlinien eines Kompanders, und.

Fig. 4             ein Blockschaltbild für die Zusammenschaltung der erfindungsgemäßen Schaltungsanordnung mit einem adaptiven Filter.

Zur Erläuterung des Sachverhalts ist in Fig. 1 eine typische Übertragungsstrecke zwischen einem lokalen Teilnehmer A und einem fernen Teilnehmer B dargestellt. Auf der Seite des lokalen Teilnehmers A befindet sich ein Endgerät 1 und gegebenenfalls eine Freisprecheinrichtung 2, ein Leitungsecho-Unterdrücker 3 und eine erste Gabelschaltung 4. Die unterschiedliche Laufzeit der Signale durch das Netz wird durch den Block 5 symbolisiert. Am fernen Ende der Übertragungsstrecke befindet sich eine zweite Gabelschaltung 6 und gegebenenfalls eine Freisprecheinrichtung 7 für das Endgerät 8 des fernen Teilnehmers B.

Die Freisprecheinrichtung 2 des lokalen Teilnehmers A enthält einen Echokompensator, beispielsweise bestehend aus einem adaptiven Echofilter und einem Freisprechkompander, zur Unterdrückung der lokalen Echos 8.1, die durch die akustische Kopplung zwischen dem Lautsprecher 1.1 und dem Mikrofon 1.2 beim Empfang von Nachrichten des fernen Teilnehmers B entstehen.

Mit der erfindungsgemäßen Lösung für den Leitungsecho-Unterdrücker 3 werden die in der ersten Gabelschaltung 4 und die in der zweiten Gabelschaltung 6 entstehenden Leitungsechos 4.1, 6.1 unterdrückt, die bei der Übertragung von Signalen vom lokalen Teilnehmer A zum fernen Teilnehmer B entstehen. Das in der ersten Gabelschaltung 4 entstehende Echo wird als nahes Echo 4.1 bezeichnet und ist durch eine kurze, im wesentlich konstante Laufzeit charakterisiert. Das in der zweiten Gabelschaltung 6 entstehende Echo wird als fernes Echo 6.1 bezeichnet und hat bedingt durch sehr verschiedene Übertragungsmittel, wie beispielsweise Kabel und/oder Satellitenstrecken, sehr unterschiedliche Laufzeiten. Auf einem realen Übertragungsweg können beispielsweise mehrere Umsetzungen, wie in Fig. 1 dargestellt, in Kette geschaltet vorkommen.

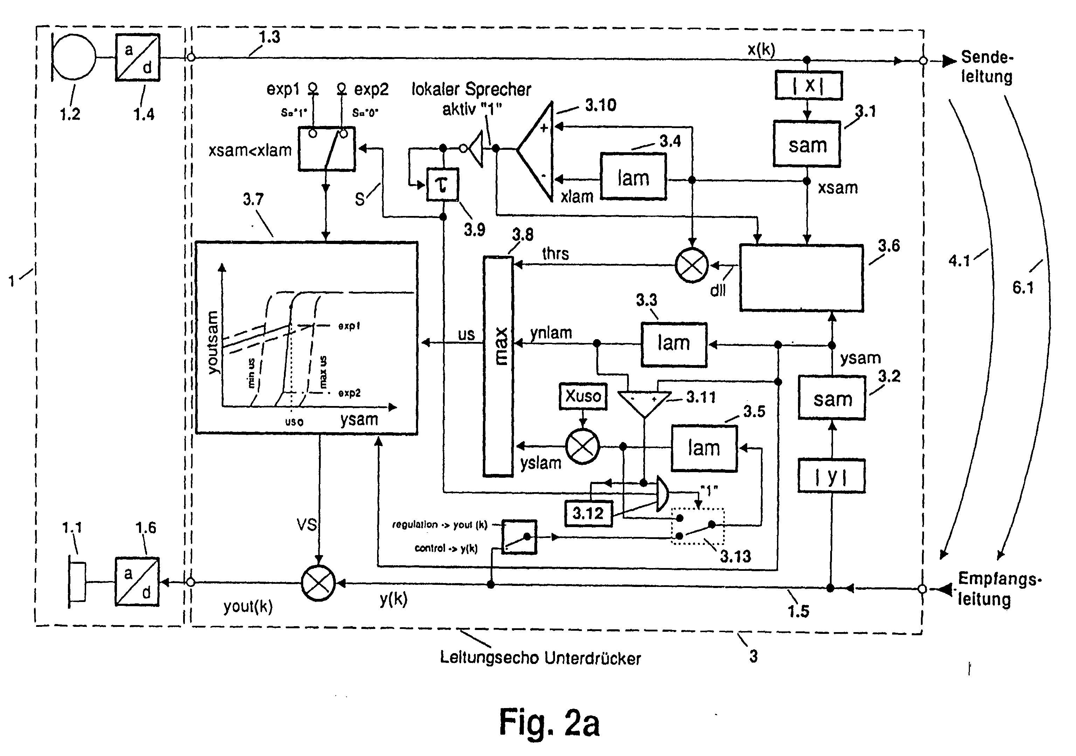

Gemäß Fig. 2a besteht der Leitungsecho-Unterdrücker 3 im wesentlichen aus einem Kompander 3.7 mit einer Steuerschaltung aus einem Kopplungsschätzer 3.6, einem ersten Integrator 3.1, einem zweiten Integrator 3.2, einem dritten Integrator 3.3, einem vierten Integrator 3.4 und einem fünften Integrator 3.5 sowie aus einem Maximalwertentscheider 3.8. Der Leitungsecho-Unterdrücker 3 ist mit einem lokalen Endgerät 1 verbunden, d.h. mit dessen Mikrofon 1.2 über einen im Sendepfad 1.3 liegenden Analog/Digital-Wandler 1.4 und mit dessen Wiedergabeteil mit einem Digital/Analog-Wandler 1.6 und Hörkapsel 1.1 im Empfangspfad 1.5.

Der Sendepfad 1.3 ist elektrisch durch nichtangepaßte Gabelschaltungen 4, 6 gemäß Fig. 1 über das nahe Echo 4.1 und über das ferne Echo 6.1 mit dem Empfangspfad 1.5 verkoppelt, über den die empfangenen Signale bei Sprachübertragung einem Digital/Analog-Wandler 1.6 mit nachgeschalteter Hörkapsel 1.1 zugeführt werden.

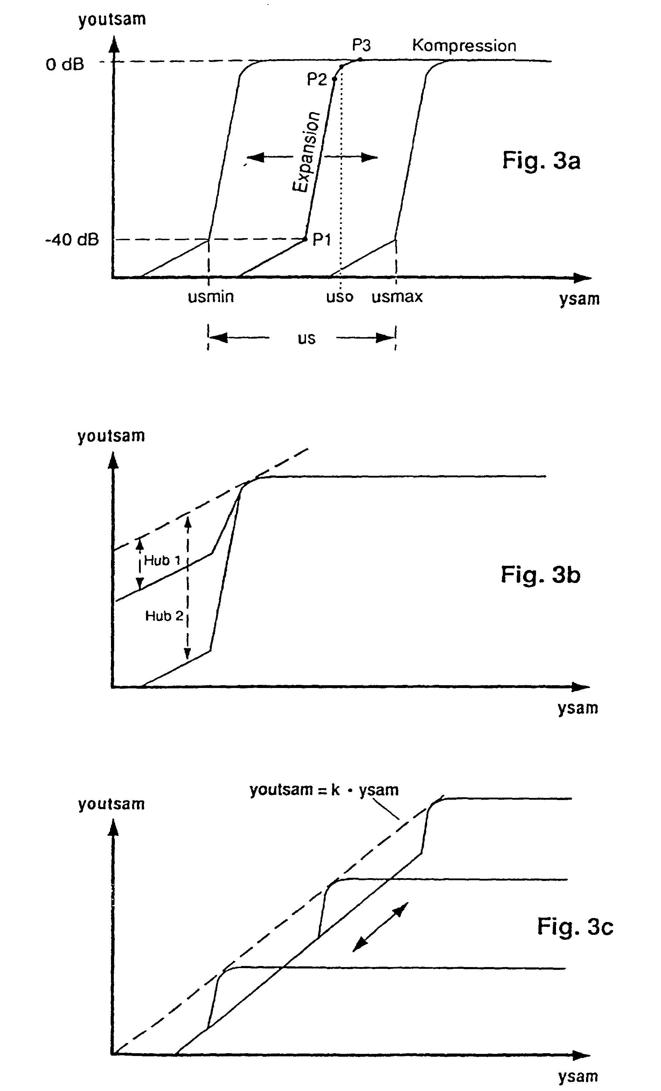

Im folgenden wird das erfindungsgemäße Verfahren zur Leitungsechounterdrückung beschrieben, mit dem die jeweils erforderliche Übertragungskennlinie des Kompanders, kurz Kompanderkennlinie, eingestellt wird. Zur Erläuterung sind in den Fig. 3a, 3b, 3c verschiedene Kompanderkennlinien dargestellt, die für unterschiedliche Anforderungen eingesetzt werden können. In Fig. 3a ist eine Übertragungskennlinienschar, nämlich Ausgangswerte youtsam als Funktion der Eingangswerte ysam dargestellt, youtsam = f (ysam).

Ein Steuerwert us, der im Bereich usmin < us < usmax liegt, legt die verschiedenen Kennlinienlagen fest. Der Eingangswert ysam stellt dabei den Kurzzeitmittelwert der Abtastfolge y(k) des Empfangssignals dar, der Ausgangswert youtsam stellt den Kurzzeitmittelwert der Abtastfolge yout(k) des Ausgangssignals dar. Der Quotient aus Ausgangswert youtsam und Eingangswert ysam gibt den Verstärkungsfaktor VS an.

Bei der folgenden Beschreibung wird auf charakteristische Übertragungskennlinienabschnitte der Fig. 3a Bezug genommen. Mit steigenden Eingangswerten ysam wird bis zum Punkt P1 ein Bereich kleiner und konstanter Verstärkung, die wesentlich kleiner als 1 ist, durchlaufen. Zwischen den Punkten P1 und P2 liegt der Bereich der Expansion in dem die Eingangswerte ysam hoch verstärkt werden. Daran schließt sich zwischen den Punkten P2 und P3 ein Übergangsbereich zu dem sich anschließenden Kompressionsbereich an. Im Übergangsbereich liegt üblicherweise der Arbeitspunkt, d.h. der Sollwert für das Sprachsignal mit dem aktuellen Wert us. Im Kompressionsbereich sind die Ausgangswerte youtsam bei veränderlichen Eingangswerten ysam konstant.

Zunächst wird die elektrische Kopplung zwischen dem Sendepfad 1.3 und dem Empfangspfad 1.5 für das nahe Echo 4.1 geschätzt. Dazu wird aus der Abtastfolge x(k) des Sendesignals mit dem ersten Integrator 3.1 ein Kurzzeitmittelwert (short-time average magnitude) xsam des Sendesignals und aus der Abtastfolge y(k) des Empfangssignals mit dem zweiten Integrator 3.2 ein Kurzzeitmittelwert ysam des Empfangssignals gebildet. Gemäß

$$ dll = \min \left\{ \frac{ysam}{xsam} \right\} , \text{ nur wenn a) lokaler Sprecher aktiv} \atop \text{b) } I \approx 5s $$

wird aus dem Quotienten der Kurzzeitmittelwerte ysam und xsam der minimale elektrische Kopplungsfaktor dll zwischen Sendepfad 1.3 und Empfangspfad 1.5 in jeweils aufeinanderfolgenden Zeitintervallen I, mit beispielsweise I ≈ 5s, ermittelt, der mit dem Kurzzeitmittelwert xsam des Sendesignals bewertet wird und ein Steuersignal thrs für die Kompanderkennlinie liefert. Die Schätzung des Kopplungsfaktors dll erfolgt nur, wenn der lokale Teilnehmer A spricht. Um diesen Zustand detektieren zu können, wird a us dem Kurzzeitmittelwert xsam des Sendesignals mit dem vierten Integrator 3.4 ein Langzeitmittelwert (long-time average magnitude) xlam gebildet. Falls der Kurzzeitmittelwert xsam des Sendesignals größer ist als der Langzeitmittelwert xlam des Sendesignals, so ist das ein Merkmal dafür, daß der lokale Teilnehmer A spricht; der kurzzeitig ansteigende Sprachpegel hebt sich von dem Geräuschpegel ab. Dadurch ergibt sich die Möglichkeit, Sprache, die sich allgemein durch eine hohe Dynamik auszeichnet, von einem im allgemeinen gleichförmigeren Umgebungsgeräusch zu unterscheiden. Ein einmal ermittelter Kopplungsfaktor dll wird solange beibehalten, bis ein neuer gültiger Wert für dll bestimmt ist.

In gleicher Weise wird aus dem Kurzzeitmittelwert ysam des Empfangssignals mittels des dritten Integrators 3.3 ein Langzeitmittelwert ynlam gebildet, der ein Maß für den Geräuschpegel auf dem Empfangspfad 1.5 ist.

Je größer das Steuersignal thrs und je größer der Langzeitmittelwert ynlam des Empfangssignals ist, desto größer ist der Steuerwert us der Kompanderkennlinie, das bedeutet, daß die Kompanderkennlinie mit steigendem Steuerwert us zu größeren Eingangswerten ysam verschoben wird. Diese Verschiebung der Kompanderkennlinie der zuvor im Stand der Technik genannten Patentschrift DE 42 29 912 A1 ist an sich bekannt. Für die Unterdrückung von fernen Echos bringt diese Lösung jedoch nicht den gewünschten Erfolg.

Die Kopplungswerte dll für das nahe Echo und die Laufzeit der nahen Echos sind in praktischen Fällen relativ klein, ebenso kann der Geräuschpegel auf dem Empfangspfad klein sein, so daß der Steuerwert us bei kleinen Eingangswerten ysam liegt, um für den lokalen Teilnehmer A das von seiner Sprache überdeckte nahe Echo nur so weit zu dämpfen, daß unangenehmes Rückhören verhindert wird. Bei geringer Leitungsdämpfung kann nun der Zustand eintreten, daß der Sprachpegel des fernen Teilnehmers B weit im Kompressionsbereich der Kompanderkennlinie liegt und der Pegel des fernen Echos bei einem Abstand zum Sprachpegel von beispielsweise 17dB ebenfalls noch im Kompressionsbereich der Kompanderkennlinie liegt und somit durchgelassen wird. Das ferne Echo soll aber gerade unterdrückt werden, so daß erfindungsgemäß eine Kennlinienverschiebung zusätzlich von der Größe des Sprachpegels des fernen Teilnehmers B auf dem Empfangspfad 1.5 abhängig gemacht wird.

Zur sicheren und schnellen Adaptierung der Kompanderkennlinie an die jeweils aktuelle Situation muß daher der Sprachpegel auf dem Empfangspfad zuverlässig detektiert werden. Dazu wird zunächst der Kurzzeitpegel ysam mit dem Langzeitpegel ynlam im Komparator 3.11 verglichen. Falls

$$ysam > ynlam$$

so ist es sehr wahrscheinlich, daß Sprachsignale des fernen Teilnehmers B empfangen werden, wenn die Bedingung für eine Zeitdauer $t_0 > 200$ ms erfüllt ist. Ist diese Bedingung nur für eine kürzere Zeit erfüllt, so kann es sich um eine Leitungsstörung gehandelt haben. Die Überprüfung, ob ein Signal mit ysam > ynlam für eine Zeitdauer $t_0$ vorliegt, wird mit einem Zeitzähler 3.12 durchgeführt. Um für die weitere Auswertung gedämpfte Sprachpegel von fernen Echos unterscheiden zu können, wird bei sprechendem lokalen Teilnehmer A und während einer sich an die Sprache anschließenden Pause $\tau$, die größer als die maximale Laufzeit eines fernen Echos ist, kein Sprachpegel auf dem Empfangspfad 1.5 gemessen. Dazu wird mit den Schaltelementen 3.10 und 3.9 und einer UND-Verknüpfung ein entsprechendes Steuersignal für einen Umschalter 3.13 gebildet, der entweder den Langzeitmittelwert im fünften Integrator 3.5 festhält oder eine Neuberechnung dieses Wertes zuläßt. Eine Sprachpegelmessung des fernen Teilnehmers B findet also nur statt, wenn

1. ysam > ynlam ist,
2. Bedingung 1. für eine Zeit $t_0 > 200$ms erfüllt ist und
3. mindestens die Zeit $\tau$ vergangen ist, seit dem Ereignis, daß der lokale Teilnehmer A schweigt.

Unter Einhaltung dieser Bedingung wird aus der Abtastfolge y(k) des Empfangssignals mit dem fünften Integrator 3.5 ein mit einem Faktor Xuso gewichteter Langzeitmittelwert yslam gebildet.

Mit dem Maximalwertentscheider 3.8 wird bestimmt, ob die Kopplung am nahen Leitungsende, der Geräuschpegel oder der Sprachpegel des Empfangspfades dominierend für die Festlegung der Lage der Kompanderkennlinie ist. Die Lage des Spannungswertes us wird durch den Wichtungsfaktor Xuso so geregelt, daß der Sprachpegel des fernen Teilnehmers B im Übergangsbereich zwischen Expansion und Kompression liegt, also gemäß Fig. 3a sinngemäß zwischen den Punkten P2 und P3 und als Arbeitspunkt uso eingezeichnet. Bei fehlendem Sprachpegel auf dem Empfangspfad 1.5 bleibt die Größe des zuvor bestimmten Langzeitmittelwerts yslam erhalten bis erneut ein Sprachpegel des fernen Teilnehmers B ausgewertet wird.

Es ist auch möglich, den gewichteten Langzeitmittelwert yslam des Empfangssignals aus der Abtastfolge yout(k), das ist die mit einem vom Kompander 3.7 festgelegten Verstärkungsfaktor VS bewertete Abtastfolge y(k) des Empfangssignals zu bilden. Durch diese Regelmöglichkeit des Spannungswertes us erfolgt die Kompanderkennlinienverschiebung mit einer leichten Verzögerung, so daß sich plötzliche Sprachpegelerhöhungen, beispielsweise durch Räuspern oder Husten, kaum auf die Kennlinienverschiebung auswirken. Ob der Regelung oder der Steuerung der Vorzug gegeben wird, ist vom subjektivem Hörempfinden abhängig.

Zweckmäßig ist es, die Sprachschätzung auf dem Empfangspfad erst vorzunehmen, nachdem die Kommunikationsverbindung aufgebaut ist, damit eine Adaptierung des Kompanders 3.7 auf Wähltöne oder Ruftöne vermieden wird.

Um die Natürlichkeit des Sprachaustauschs zu verbessern, wird gemäß Fig. 3b der Hub des linearen Anfangsteils der Kompanderkennlinie, d.h. die Steilheit des Expanders, steuerbar gemacht. In Fig. 3b sind zwei Kompanderkennlinien mit einem Hub 1 und einem Hub 2 eingezeichnet. Als Hub wird der Abstand zwischen dem linear ansteigenden Anfangsteil der Kompanderkennlinie und einer Parallelen, die auch Tangente am Übergangsbereich von der Expansion zur Kompression ist, definiert. Dieser Hub muß bei einer Kompanderkennlinie einerseits so groß eingestellt sein, daß kein störendes Echo übertragen wird, andererseits soll er so klein sein, daß das Hintergrundgeräusch vom fernen Teilnehmer B nicht gänzlich unterdrückt wird, damit nicht der Eindruck einer unterbrochenen Verbindung entsteht. Eine absolute Ruhe in den Sprachpausen wird unnatürlich empfunden und provoziert Nachfragen, ob die Verbindung zwischen den Teilnehmern noch besteht. Weiterhin wird die Verständlichkeit der Sprache bei geeignet kleinem Hub verbessert, da sehr leise Sprachanteile, Wortanfänge und Wortenden oft nicht genügend Energie aufweisen, um als Sprache bewertet zu werden und damit in den linearen Teil kurz unter der Expansion fallen, aber durch den kleinen Hub nicht gänzlich unterdrückt werden. So wird bei schweigendem lokalen Teilnehmer A, das bedeutet, der Kurzzeitmittelwert xsam ist kleiner als der Langzeitmittelwert xlam des Sendesignals, der geringe Hub 1 mit einer Kompanderkennlinie exp1 eingestellt. Mit dem kleinen Hub 1 wird einerseits das Umgebungsgeräusch nur soviel wie nötig unterdrückt, andererseits führt der sanftere Übergang in den Kompressionsbereich der Kompanderkennlinie bei Einsetzen der Sprache zu einem natürlicheren Spracheindruck. Wenn der lokale Teilnehmer A spricht, wird der größere Hub 2 mit einer Kompanderkennlinie exp2 eingestellt, da nunmehr ferne Echos zu erwarten sind und unterdrückt werden sollen. Schweigt der lokale Teilnehmer A, erfolgt die Umsteuerung durch das Steuersignal S von dem großen Hub 2 zu dem kleinen Hub 1 zeitverzögert über eine Verzögerungsschaltung 3.9 mit einer Zeit $\tau$, da nach dem Sprachende noch Echos zu erwarten sind.

Diese Hubumsteuerung ist vorteilhafterweise auch bei Freisprecheinrichtungen einsetzbar, bei denen der Kompander im Sendepfad liegt. Bei sprechendem lokalen Teilnehmer A wird zur Unterdrückung der lokalen Echos ein großer Hub 2 eingestellt. Die Rückstellung auf den kleinen Hub 1 kann wegen der kurzen Laufzeit des lokalen Echos dann unverzögert erfolgen.

In Fig. 3c ist eine Kompanderkennlinienschar dargestellt, bei der der jeweilige Sprachpegel entlang einer Geraden liegt, die der Verstärkung V = 1 entspricht. Dieser neue Typ von Kompanderkennlinien bewirkt, daß durch die Leitung stark bedämpfte Sprachsignale des fernen Teilnehmers B auch leise empfangen werden und Signale mit geringerer Dämpfung entsprechend lauter. Vergleichsweise werden bei einem Übertragungssystem mit der Kompanderkennlinienschar gemäß Fig. 3a bei schlechten Verbindungen die Leitungsdämpfungen ausgeglichen, und die Empfangslautstärke der Sprache wird weitgehend unabhängig vom Sendepegel des fernen Teilnehmers B und der Leitungsdämpfung gehalten.

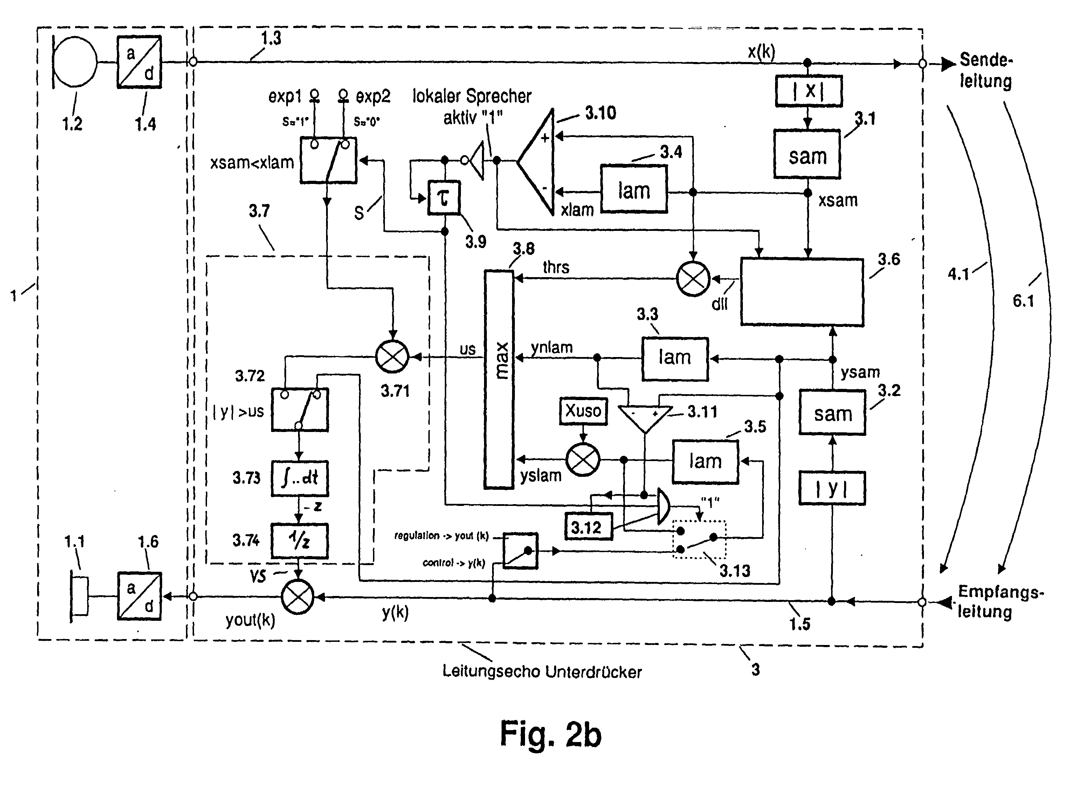

In Fig. 2b ist eine Realisierungsmöglichkeit für den Kompander 3.7 dargestellt. Die dazu erforderliche Schaltungsanordnung besteht im wesentlichen aus einem Multiplizierer 3.71, einem Umschalter 3.72, einem Integrator 3.73 und einem Invertierer 3.74.

Die Stellung des Umschalters 3.72 wird von der aktuellen Relation zwischen dem Betrag der Abtastfolge des Eingangssignals y(k) und dem Spannungswert us bestimmt. Die in Fig. 2b dargestellte Stellung des Umschalters 3.72 wird eingenommen, wenn der Betrag der Abtastfolge des Empfangssignals y(k) größer als der Spannungswert us ist. Dann wird dem Intgrator 3.73 der Langzeitmittelwert des Empfangssignals ysam zugeführt. Falls der Betrag der Abtastfolge des Empfangssignals y(k) kleiner als der Spannungswert us ist, gelangt der mit dem aktuellen Hubwert der Kompanderkennlinie exp 1 oder exp 2 multiplizierte Spannungswert us an den Integrator 3.73.

Dadurch wird die Realisierung der unterschiedlichen Kennlinienabschnitte des Kompanders 3.7 vorbereitet. Die Integration des Ausgangssignals des Umschalters 3.73 erfolgt bei ansteigenden Impulsflanken mit einer kleinen Zeitkonstanten, beispielsweise 6 ms, und bei abfallenden Impulsflanken mit einer größeren Zeitkonstanten, beispielsweise 60 ms. Aus dem Ausgangswert z des Integrators 3.73 wird mit dem Invertierer 3.74 der Kehrwert gebildet, der die von der aktuellen Situation abhängige Verstärkung VS des Kompanders darstellt, mit der die Abtastfolge y(k) des Empfangssignals multipliziert wird und somit die Abtastfolge yout(k) des Ausgangssignals des Leistungsecho-Unterdrückers 3 liefert.

Obwohl das Ausführungsbeispiel auf die Sprachübertragung bezogen ist, ist es jedoch problemlos möglich, das Verfahren und die Schaltungsanordnung auch dann anzuwenden, wenn beispielsweise mit Hilfe eines Modems eine Datenübertragung erfolgt. Die Unterdrückung von Echos führt in diesem Fall zur Erhöhung der Sicherheit der Übertragung und zur Verringerung der Fehlerrate.

Die Schaltungsanordnung kann an unterschiedlichen Stellen der Übertragungsstrecke eingesetzt werden. Im Zusammenwirken mit einer Freisprecheinrichtung kann sie in einem Kommunikationsendgerät eingesetzt werden, so daß sowohl lokale Echos als auch Leitungsechos unterdrückt werden. Dabei können Übertragungsstrecken mit gemischt Vierdrahtleitungen bei digitaler Technik und Zweidrahtleitungen mit analoger Technik, mit oder ohne lokale Freisprecheinrichtungen, mit oder ohne Signalverarbeitungssysteme, wie Codecs und Satellitenstrecken, vorkommen.

Es ist auch möglich, die Schaltungsanordnung jeweils dem Entstehungsort der Leitungsechos, der Gabelschaltung, zuzuordnen.

Eine weitere Einsatzmöglichkeit ergibt sich zentral zum Beispiel in einer Basisstation eines Funkvermittlungssystems nach dem GSM- oder DECT-Standard. Dort können beispielsweise mehrere identische Schaltungsanordnungen eingesetzt werden, die je nach Bedarf einer Kommunikationsverbindung in das öffentliche Netz zugeordnet werden. Auf Grund des geringen Aufwandes für die Schaltungsanordnung ist es möglich, zum Beispiel acht Schaltungsanordnungen mit nur einem digitalen Signalprozessor zu realisieren.

Schließlich kann die Schaltungsanordnung zentral, zum Beispiel in einer Vermittlungszentrale angeordnet werden, wo sie bei Bedarf in eine Übertragungsstrecke eingeschaltet werden kann.

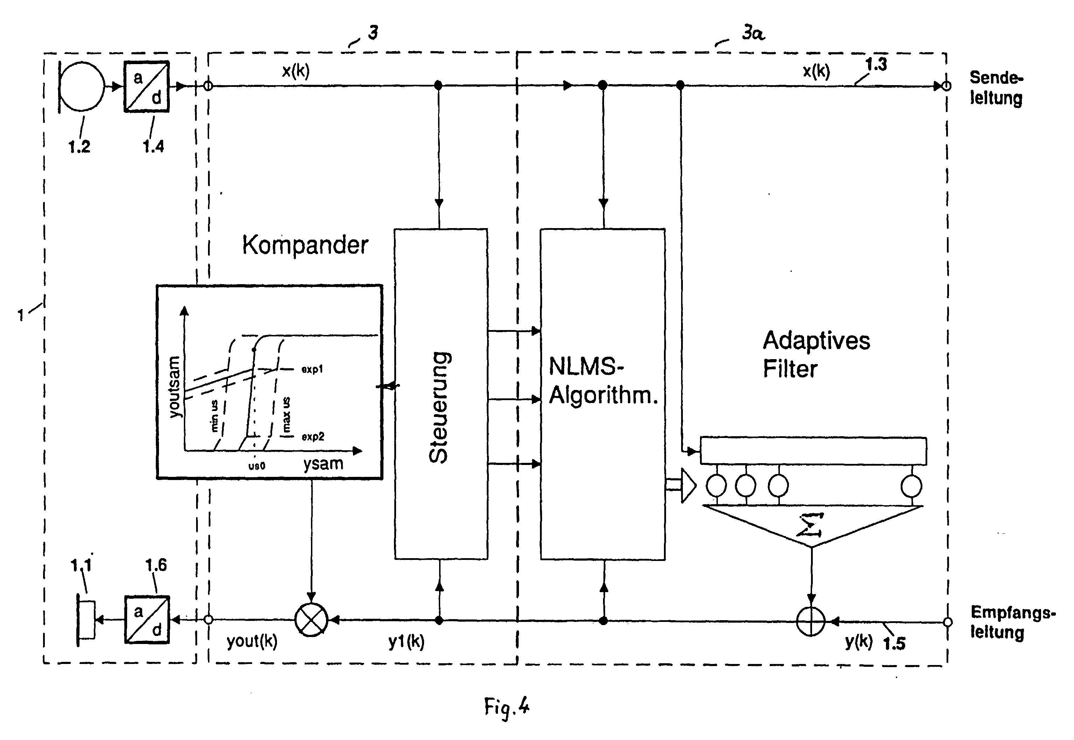

In einer vorteilhaften Ausgestaltung der Erfindung kann der Leitungsecho-Unterdrücker 3 mit einem kurzen adaptiven Filter 3a gemäß Fig. 4 zur Echounterdrückung naher Echos kombiniert werden. Die Wirkung des adaptiven Filters besteht darin, die nahen Echos von der Leitung möglichst gut zu unterdrücken, so daß insgesamt ein Systemgewinn erzielt wird, da die Toleranzen für die Einstellung der Kompanderkennlinie des Leitungsecho-Unterdrückers 3 dann etwas größer sein dürfen.

Das adaptive Filter kann dabei eine relativ kurze Länge von beispielsweise weniger als 100 Speicherelementen haben, da es nur die ganz nahen Echos der Leitung zu reduzieren braucht. Das kurze adaptive Filter wird in bekannter Weise nach dem Normalized Least Mean Square Algorithmus eingestellt, wobei vorteilhafterweise die Steuerungskriterien für den Kompander auch für die Steuerung der Schrittweite a bei dem genannten Algorithmus für das adaptive Filter angewendet werden können.

Es ist weiterhin möglich, die Steuerungskriterien für den Kompander auch zur Steuerung eines variabel einstellbaren Dämpfungsgliedes zur Echoaustastung einzusetzen.

Die erfindungsgemäße Schaltungsanordnung, bedarfsweise mit einem kurzen adaptiven Filter kombiniert, kann in Zusammenschaltung mit einer Freisprecheinrichtung aus Freisprechkompander und bedarfsweise einem adaptiven Filter eingesetzt werden, so daß dann eine wesentliche Verbesserung der Kommunikationseigenschaften einer echobehafteten Übertragungsstrecke in beiden Übertragungsrichtungen erzielt wird.

**Patentansprüche**

1.  Verfahren zur Verbesserung der Übertragungseigenschaften einer echobehafteten Übertragungsstrecke in einem Telekommunikationsnetz mit einem Kompander (3.7), der zur Unterdrückung von einem Leitungsecho (4.1, 6.1) in dem Empfangspfad (1.5) der Übertragungsstrecke liegt und der zur Unterdrückung von einem lokalen Echo (8.1) bei einer Freisprecheinrichtung (2) im Sendepfad (1.3) der Übertragungsstrecke liegt, wobei die Lage der Übertragungskennlinie des Kompanders (3.7) bei dem lokalen Echo (8.1) in Abhängigkeit von der akustischen Kopplung zwischen einem Lautsprecher (1.1) und einem Mikrofon (1.2) und von der Größe der Geräusche in dem das Mikrofon (1.2) und den Lautsprecher (1.1) umgebenden Raum gesteuert wird, **dadurch gekennzeichnet, daß** zur Unterdrückung des Leitungsechos (4.1, 6.1) die Lage der Übertragungskennlinie des Kompanders (3.7) in Abhängigkeit von der elektrischen Kopplung (dll) zwischen Sendepfad (1.3) und Empfangspfad (1.5), von der Größe der Geräuschspannung auf dem Empfangspfad (1.5) und von dem Sprachpegel des fernen Teilnehmers (B) auf dem Empfangspfad (1.5) gesteuert wird und/oder daß die Form der Übertragungskennlinie des Kompanders (3.7) in Abhängigkeit von dem Verhältnis zwischen dem Sprachpegel des lokalen Teilnehmers (A) und dem Geräuschpegel bei dem lokalen Teilnehmer (A) auf dem Sendepfad (1.3) gesteuert wird.

2.  Verfahren nach Anspruch 1, **dadurch gekennzeichnet,**

    -   **daß** aus der Abtastfolge (x(k)) auf dem Sendepfad (1.3) ein Kurzzeitmittelwert (xsam) und ein Langzeitmittelwert (xlam) gebildet werden und daß aus der Abtastfolge (y(k)) auf dem Empfangspfad (1.5) ein Kurzzeitmittelwert (ysam) und ein Langzeitmittelwert (ynlam) gebildet werden,

    -   **daß** die elektrische Kopplung (dll) zwischen Sendepfad (1.3)und Empfangspfad (1.5) bestimmt wird, indem der Quotient aus dem Kurzzeitmittelwert (ysam) der Abtastfolge (y(k)) auf dem Empfangspfad (1.5) und dem Kurzzeitmittelwert (xsam) der Abtastfolge (x(k)) auf dem Sendepfad (1.3) gebildet wird,

    -   **daß** die Größe der Geräuschspannung auf dem Empfangspfad (1.5) aus dem Langzeitmittelwert (ynlam) der Abtastfole (y(k)) auf dem Empfangspfad (1.5) bestimmt wird,

    -   **daß** der Sprachpegel des fernen Teilnehmers (B) auf dem Empfangspfad (1.5) bestimmt wird, indem der Kurzeitmittelwert (ysam) der Abtastfolge (y(k)) auf dem Empfangspfad (1.5) dann gemessen wird, wenn dieser Wert für eine definierte Zeitdauer größer als der Langzeitmittelwert (ynlam) der Abtastfolge (y(k)) auf dem Empfangspfad (1.5) ist und

    -   **daß** aus der mit dem Kurzzeitmittelwert (xsam) der Abtastfolge (x(k)) auf dem Sendepfad (1.3) bewerteten elektrischen Kopplung (dll), der Größe der Geräuschspannung und dem Sprachpegel des fernen Teilnehmers (B) der maximale Wert ermittelt wird, der den Spannungswert (us) für die Steuerung der Übertragungskennlinie des Kompanders (3.7) bildet, wobei mit steigendem Spannungswert (us) die Übertragungskennlinie zu höheren Eingangsspannungswerten des Kompanders (3.7) verschoben wird.

3.  Verfahren nach Anspruch 1 und 2, **dadurch gekennzeichnet, daß** die Form der Übertragungskennlinie des Kompanders (3.7) bestimmt wird, indem bei einem Kurzzeitmittelwert (xsam), der kleiner ist als der Langzeitmittelwert (xlam) der Abtastfolge (x(k)) auf dem Sendepfad (1.3) ein kleiner Hub (Hub1) eingestellt wird und indem im anderen Fall, wenn der Kurzzeitmittelwert (xsam) größer ist als der Langzeitmittelwert (xlam), ein großer Hub (Hub2) eingestellt wird.

4.  Verfahren nach Anspruch 3, **dadurch gekennzeichnet, daß** die Umsteuerung der Übertragungskennlinie des Kompanders (3.7) von einem kleineren Hub (Hub1) auf einen größeren Hub (Hub2) zeitverzögert mit einer Verzögerungsschaltung (3.9) erfolgt.

5.  Schaltungsanordnung zur Verbesserung der Übertragungseigenschaften einer echobehafteten Übertragungsstrecke in einem Telekommunikationsnetz mit einem Kompander (3.7), der zur Unterdrückung von einem Leitungsecho (4.1. 6.1) in dem Empfangspfad (1.5) der Übertragungsstrecke liegt und der zur Unterdrückung von einem lokalen Echo (8.1) bei einer Freisprecheinrichtung (2) im Sendepfad (1.3) der Übertragungsstrecke liegt, **dadurch gekennzeichnet, daß** dem Kompander (3.7) eine Steuerschaltung zugeordnet ist, die einen Maximalwertentscheider (3.8), einen Kopplungsschätzer (3.6) und fünf Integratoren (3.1, 3.2, 3.3, 3.4, 3.5) umfasst, wobei der Ausgang der Steuerschaltung gleichzeitig Ausgang des Maximalwertscheiders (3.8) ist, dessen erster Eingang mit dem Kopplungsschätzer (3.6) verbunden ist, dessen zweiter Eingang mit dem dritten Integrator (3.3) verbunden ist und dessen dritter Eingang mit dem fünften Integrator (3.5) verbunden ist, daß der Kopplungsschätzer (3.6) über den ersten Integrator (3.1) an den Sendepfad (1.3) und über den zweiten Integrator (3.2) an den Empfangspfad (1.5) geschaltet ist und daß der dritte Integrator (3.3) sowohl mit dem Kopplungsschätzer (3.6) als auch mit dem zweiten Integrator (3.2) verbunden ist und der vierte Integrator (3.4) sowohl mit dem Kopplungsschätzer (3.6) als auch mit dem ersten Integrator verbunden ist und der fünfte Integrator (3.5) an den Empfangspfad geschaltet ist.

6.  Schaltungsanordnung nach Anspruch 5, **dadurch gekennzeichnet, daß** sie in Verbindung mit einem Modem für die Übertragung von Daten eingesetzt wird.

7.  Schaltungsanordnung nach Anspruch 5, **dadurch gekennzeichnet, daß** sie bedarfsweise

    -   in Verbindung mit einer Freisprecheinrichtung in einem Kommunikationsendgerät eingesetzt wird,

    -   einer Gabelschaltung zugeordnet wird,

    -   mehrfach zentral in einer Basisstation eines Funkvermittlungssystems oder in einer Vermittlungszentrale angeordnet ist.

8.  Schaltungsanordnung nach Anspruch 5, **dadurch gekennzeichnet, daß** sie in Kombination mit einem adaptiven Filter eingesetzt wird.

**Claims**

1.  Method for improving the transmission properties of a transmission link subjected to echo in a telecommunications network, comprising a compander (3.7) which, for the purpose of suppressing a line echo (4.1, 6.1), is located in the receive path (1.5) of the transmission link, and which, for the purpose of suppressing a local echo (8.1) in the case of a handsfree device (2), is located in the transmit path (1.3) of the transmission link, the position of the transmission characteristic of the compander (3.7) being controlled, in the case of the local echo (8.1), in dependence on the acoustic coupling between a loudspeaker (1.1) and a microphone (1.2) and on the magnitude of the noises in the space surrounding the microphone (1.2) and the loudspeaker (1.1), **characterized in that**, for the purpose of suppressing the line echo (4.1, 6.1), the position of the transmission characteristic of the compander (3.7) is controlled in dependence on the electrical coupling (d11) between the transmit path (1.3) and the receive path (1.5), on the magnitude of the noise voltage on the receive path (1.5) and on the speech level of the remote subscriber (B) on the receive path (1.5), and/or the shape of the transmission characteristic of the compander (3.7) is controlled in dependence on the ratio between the speech level of the local subscriber (A) and the noise level at the local subscriber (A) on the transmit path (1.3).

2.  Method according to claim 1, **characterized in that**

- a short-time average magnitude (xsam) and a long-time average magnitude (xlam) are formed from the sampling sequence (x(k)) on the transmit path (1.3), and a short-time average magnitude (ysam) and a long-time average magnitude (ynlam) are formed from the sampling sequence (y(k)) on the receive path (1.5),

- the electrical coupling (d11) between the transmit path (1.3) and the receive path (1.5) is determined by forming the quotient from the short-time average magnitude (ysam) of the sampling sequence (y(k)) on the receive path (1.5) and the short-time average magnitude (xsam) of the sampling sequence (x(k)) on the transmit path (1.3),

- the magnitude of the noise voltage on the receive path (1.5) is determined from the long-time average magnitude (ynlam) of the sampling sequence (y(k)) on the receive path (1.5),

- the speech level of the remote subscriber (B) on the receive path (1.5) is determined by measuring the short-time average magnitude (ysam) of the sampling sequence (y(k)) on the receive path (1.5) when this magnitude is greater, for a defined duration, than the long-time average magnitude (ynlam) of the sampling sequence (y(k)) on the receive path (1.5), and

- the maximum value which forms the voltage value (us) for controlling the transmission characteristic of the compander (3.7) is determined from the electrical coupling (d11) weighted with the short-time average magnitude (xsam) of the sampling sequence (x(k)) on the transmit path (1.3), the magnitude of the noise voltage and the speech level of the remote subscriber (B), the transmission line being displaced toward higher input voltage values of the compander (3.7) as the voltage value (us) increases.

3. Method according to claims 1 and 2, **characterized in that** the shape of the transmission characteristic of the compander (3.7) is determined by setting a lesser rise (rise1) in the case of a short-time average magnitude (xsam) which is smaller than the long-time average magnitude (xlam) of the sampling sequence (x(k) on the transmit path (1.3), and by setting a greater rise (rise2) in the other case, when the short-time average magnitude (xsam) is greater than the long-time average magnitude (xlam).

4. Method according to claim 3, **characterized in that** the changeover of the transmission characteristic of the compander (3.7) from a lesser rise (rise1) to a greater rise (rise2) is effected with a time delay, by means of a delay circuit (3.9).

5. Circuit arrangement for improving the transmission properties of a transmission link subjected to echo in a telecommunications network, comprising a compander (3.7) which, for the purpose of suppressing a line echo (4.1, 6.1), is located in the receive path (1.5) of the transmission link, and which, for the purpose of suppressing a local echo (8.1) in the case of a handsfree device (2), is located in the transmit path (1.3) of the transmission link, **characterized in that** assigned to the compander (3.7) is a control circuit which comprises a maximum-value decision circuit (3.8), a coupling estimator (3.6) and five integrators (3.1, 3.2, 3.3, 3.4, 3.5), the output of the control circuit being at the same time an output of the maximum-value decision circuit (3.8) whose first input is connected to the coupling estimator (3.6), whose second input is connected to the third integrator (3.3) and whose third input is connected to the fifth integrator (3.5), the coupling estimator (3.6) is interconnected to the transmit path (1.3) via the first integrator (3.1) and to the receive path (1.5) via the second integrator (3.2), and the third integrator (3.3) is connected both to the coupling estimator (3.6) and to the second integrator (3.2), and the fourth integrator (3.4) is connected both to the coupling estimator (3.6) and to the first integrator, and the fifth integrator (3.5) is interconnected to the receive path.

6. Circuit arrangement according to claim 5, **characterized in that** it is used in combination with a modem for the transmission of data.

7. Circuit arrangement according to claim 5, **characterized in that**, as required,

- it is used in combination with a handsfree device in a communications terminal,

- it is assigned to a hybrid circuit,

- it is provided multiply and centrally in a base station of a mobile services switching system or in a switching centre.

8.  Circuit arrangement according to claim 5, **characterized in that** it is used in combination with an adaptive filter.

**Revendications**

1.  Procédé pour améliorer la caractéristique de transmission d'une liaison de télécommmunications perturbée par un écho avec un compresseur-expanseur (3.7) qui se trouve sur la voie de réception (1.5) de la liaison de transmission pour supprimer un écho de ligne (4.1, 6.1) et qui se trouve sur la voie d'émission (1.3) de la liaison de transmission pour supprimer un écho local (8.1) d'un dispositif mains libres (2), moyennant quoi la position de la ligne caractéristique de transmission du compresseur-expanseur (3.7) dans le cas de l'écho local (8.1) est réglée en fonction du couplage acoustique entre un haut-parleur (1.1) et un microphone (1.2) et de l'intensité des bruits dans l'environnement du microphone (1.2) et du haut-parleur (1.1),
    **caractérisé en ce que**,
    pour supprimer l'écho de ligne (4.1, 6.1), la position de la ligne caractéristique de transmission du compresseur-expanseur (3.7) est réglée en fonction du couplage électrique (dll) entre la voie d'émission (1.3) et la voie de réception (1.5), de la valeur de la tension de bruit sur la voie de réception (1.5) et du niveau de voix de l'abonné éloigné (B) sur la voie de réception (1.5) et/ou **en ce que** la forme de la ligne caractéristique de transmission du compresseur-expanseur (3.7) dépend du rapport entre le niveau de voix de l'abonné local (A) et le niveau de bruit de l'abonné local (A) sur la voie d'émission (1.3).

2.  Procédé selon la revendication 1, **caractérisé en ce que**,

    -   à partir de la série de balayage (x(k)) sur la voie d'émission (1.3), une valeur moyenne à court terme (xsam) et valeur moyenne à long terme (xlam) sont obtenues et **en ce que**, à partir de la série de balayage (y(k)) sur la voie de réception (1.5), une valeur moyenne à court terme (ysam) et valeur moyenne à long terme (ynlam) sont obtenues,
    -   **en ce que** le couplage électrique (dll) entre la voie d'émission (1.3) et la voie de réception (1.5) est défini et que le rapport entre la valeur moyenne à court terme (ysam) de la série de balayage (y(k)) sur la voie de réception (1.5) et la valeur moyenne à court terme (xsam) de la série de balayage (x(k)) sur la voie d'émission (1.3) est calculé,
    -   **en ce que** la valeur de la tension de bruit sur la voie de réception (1.5) est définie à partir de la valeur moyenne à long terme (ynlam) de la série de balayage (y(k)) sur la voie de réception (1.5),
    -   **en ce que** le niveau de voix de l'abonné éloigné (B) sur la voie de réception (1.5) est défini et que la valeur moyenne à court terme (ysam) de la série de balayage (y(k)) sur la voie de réception (1.5) est alors mesurée, si cette valeur est supérieure, pour une durée définie, à la valeur moyenne à long terme (ynlam) de la série de balayage (y(k)) sur la voie de réception (1.5) et
    -   **en ce que** la valeur maximale est déterminée à partir du couplage électrique (dll) évalué avec la valeur moyenne à court terme (xsam) de la série de balayage (x(k)) sur la voie d'émission (1.3), à partir de la valeur de la tension de bruit et du niveau de voix de l'abonné éloigné (B), cette valeur maximale correspondant alors à la valeur de tension (us) utilisée pour le réglage de la ligne caractéristique de transmission du compresseur-expanseur (3.7), moyennant quoi, si la valeur de tension (us) augmente, la ligne caractéristique de transmission est déplacée vers les valeurs de tension d'entrée supérieures du compresseur-expanseur (3.7).

3.  Procédé selon la revendication 1 ou 2, **caractérisé en ce que** la forme de la ligne caractéristique de transmission du compresseur-expanseur (3.7) est définie et, pour une valeur moyenne à court terme (xsam) inférieure à la valeur moyenne à long terme (xlam) de la série de balayage (x(k)) sur la voie d'émission (1.3), une amplitude inférieure (Hub1) est utilisée et, dans l'autre cas, si la valeur moyenne à court terme (xsam) est supérieure à la valeur moyenne à long terme (xlam), une amplitude supérieure (Hub2) est utilisée.

4.  Procédé selon la revendication 3, **caractérisé en ce que** l'inversion de la ligne caractéristique de transmission du compresseur-expanseur (3.7) permettant de passer d'une petite amplitude (Hub1) à une plus grande amplitude (Hub2) est assurée, avec un temps de retard, à l'aide d'une connexion de retard (3.9).

5.  Circuit pour améliorer la caractéristique de transmission d'une liaison de télécommmunications perturbée par un écho avec un compresseur-expanseur (3.7) qui se trouve sur la voie de réception (1.5) de la liaison de transmission pour supprimer un écho de ligne (4.1, 6.1) et qui se trouve sur la voie d'émission (1.3) de la liaison de transmission pour supprimer un écho local (8.1) d'un dispositif mains libres (2), **caractérisé en ce qu'**une connexion de réglage est affectée au compresseur-expanseur (3.7), cette connexion comprenant un dispositif de réglage de la valeur maximale (3.8), un dispositif d'évaluation du couplage (3.6) et cinq intégrateurs (3.1, 3.2, 3.3, 3.4, 3.5), moyennant quoi la sortie de la connexion de réglage est simultanée à la sortie du dispositif de réglage de la valeur maximale (3.8), dont la première entrée est reliée au dispositif d'évaluation du couplage (3.6), dont la deuxième entrée est reliée au troisième intégrateur (3.3) et dont la troisième entrée est reliée au cinquième intégrateur (3.5), **en ce que** le dispositif d'évaluation du couplage (3.6) est raccordé, via le premier intégrateur (3.1), à la voie d'émission (1.3) et, via le deuxième intégrateur (3.2), à la voie de réception (1.5) et **en ce que** le troisième intégrateur (3.3) est aussi bien relié au dispositif d'évaluation du couplage (3.6) qu'au deuxième intégrateur (3.2) et que le quatrième intégrateur (3.4) est aussi bien relié au dispositif d'évaluation du couplage (3.6) qu'au premier intégrateur et que le cinquième intégrateur (3.5) est raccordé à la voie de réception.

6. Circuit selon la revendication 5, **caractérisé en ce qu'**il est utilisé en liaison avec un modem pour la transmission de données.

7. Circuit selon la revendication 5, **caractérisé en ce qu'**il est, en cas de besoin,

   - utilisé en liaison avec un dispositif mains libres dans un poste terminal de communications,

   - affecté à un termineur,

   - placé de manière centrale dans une station de base d'un système de contrôle des communications ou dans une centrale de contrôle.

8. Circuit selon la revendication 5, **caractérisé en ce qu'**il est utilisé en combinaison avec un filtre adaptable.

Fig. 1

EP 0 797 339 B1

Fig. 2a

EP 0 797 339 B1

**Fig. 2b**

EP 0 797 339 B1

youtsam

0 dB

P3    Kompression

P2

Expansion

-40 dB    P1

**Fig. 3a**

usmin    uso   usmax    ysam

us

youtsam

Hub 1

Hub 2

**Fig. 3b**

ysam

youtsam = k · ysam

youtsam

**Fig. 3c**

ysam

Fig. 4